# EUROPÄISCHE PATENTSCHRIFT

(11) **EP 1 785 447 B1**
(45) Veröffentlichungstag und Bekanntmachung des Hinweises auf die Patenterteilung: **15.04.2009**
(21) Anmeldenummer: 06022174.4
(22) Anmeldetag: 23.10.2006
(51) Int. Cl.: C08J 3/205, C08K 3/34, C09D 5/03

(54) **Verfahren und Vorrichtung zur Herstellung eines Nanokomposites**
Method and device for producing nanocomposites
Procédé et dispositif pour produire de nanocomposites

(30) Priorität: 21.10.2005 DE 102005050890
(43) Veröffentlichungstag der Anmeldung: 16.05.2007
(73) Patentinhaber: Fraunhofer-Gesellschaft zur Förderung der angewandten Forschung e.V., 80686 München (DE); Ruhr-Universität Bochum, 44801 Bochum (DE)
(72) Erfinder: Bertling, Jürgen, 44139 Dortmund (DE); Rechberger, Marcus, 46562 Voerde (DE); Weidner, Eckhard, Dr., 44795 Bochum (DE); Petermann, Marcus, Dr., 58455 Witten (DE)
(74) Vertreter: Gesthuysen, von Rohr & Eggert

(56) Entgegenhaltungen:
- WO-A1-20/05056645
- US-A1- 2005 131 126

## Beschreibung

Die Erfindung betrifft ein Verfahren nach dem Oberbegriff von Anspruch 1.

Aus der US 2005/0131126 A1 ist ein Verfahren zur Herstellung eines Nanokomposites bekannt, wobei eine Polyrmer-Ton-Mischung aufgeschmolzen und die Schmelze mit einem überkritischen Fluid in Kontakt gebracht wird, um mit Hilfe des überkritischen Fluides zu einer Verteilung des Tonmaterials in dem Polymer zu kommen.

Lösemittelfreie Beschichtungssysteme und Sinterbauteile auf Basis pulverförmiger Polymere gewinnen in der industriellen Praxis ständig an Bedeutung. Wichtige diesbezügliche Produktionstechniken sind Beschichtungsverfahren wie elektrostatisches bzw. thermisches Pulverbeschichten und Wirbelsintern, die Herstellung großer Bauteile durch Rotationssintern und von prototypischen Funktionsmodellen durch Lasersintern. Anwendungsbeispiele sind Gleit- und Verschleißschutzschichten als Führungselemente für Sicherheitsgurte, Sitze, Sonnendach und Schubfächer im Automobilbau; Behälterwandungen bzw. -auskleidungen für Kraftstofftanks und Schüttgutsilos sowie lasergesinterte Funktionsmodelle oder Kleinserien für Saugrohre, Luft- und Klimasysteme, Pumpenlaufräder, Taster und Scharniere.

Für Beschichtungspulver sind Partikelgrößen unter 200 µm, für Lasersinterpulver unter 100 µm erforderlich, für sehr feinstrukturierte Bauteile oder dünne Beschichtungen sollen die Partikelgrößen 30 µm nicht überschreiten. Zur Herstellung derartiger Beschichtungspulver werden neben Mikropartikeln Nanopartikel eingesetzt, die in einem Matrixpolymer dispergiert werden. Nach Zerkleinerung der so erhaltenen Nanokomposite können diese als Beschichtungs- und Sinterpulver für die vorgenannten Anwendungen eingesetzt werden.

Nanostrukturierte Oberflächen zeichnen sich durch geringe Haft- und Reibungskräfte aus. Darüber hinaus weisen nanostrukturierte Beschichtungen höhere Festigkeiten auf als Beschichtungen, die Mikropartikel enthalten. Auch die Festigkeit von Nanopartikeln als solchen ist aufgrund fehlender Fehlstellen und Mikrorisse größer als bei Mikropartikeln. Im Gegensatz zu Mikropartikeln beeinflussen Nanopartikel Farbe und Transparenz eines Materials nicht negativ. Ein besonders wichtiger Aspekt bei der Herstellung von Beschichtungspulvern ist darüber hinaus, daß bei der Mikronisierung der Werkstoffe keine Trennung von polymerer Matrix und Füllstoff auftritt, ein Effekt, der beim Einsatz von Mikropartikeln als Füllstoff häufig zu beobachten ist und technische Probleme bei der Weiterverarbeitung bewirkt. Nanopartikel hingegen werden aufgrund ihrer geringen Größe nicht freigelegt. Neben den beschriebenen werkstoffmechanischen und tribologischen Effekten und einer verbesserten Barrierewirkung können vor allem nanoskalige Tonminerale auch zur Integration weiterer Funktionalitäten eingesetzt werden.

Thermoplastische Nanokomposite werden derzeit in der Automobilindustrie vor allem zur Herstellung von Leichtbauteilen, in der Verpackungsindustrie zur Herstellung von Barrierefolien und in der Kabelindustrie aufgrund flammhemmender Wirkung eingesetzt. Ein Schwerpunkt bei der Entwicklung thermoplastischer Nanokomposite stellen sogenannte Nanoclay-Polymer-Komposite auf der Basis von Tonmineralen dar.

Während Komposite auf PA-Basis seit langem verfügbar sind, gewinnt die Herstellung von Kompositen auf Basis von Massenkunststoffen wie PP, PE sowie PET und PBT an Bedeutung. In der Automobilindustrie wird insbesondere die Entwicklung von PP- und TPO-Nanokompositen vorangetrieben. Nano-Masterbatches, sogenannte Nanoblend-Konzentrate, mit Nanoclay-Anteilen von 40 Gew.-%, sind bereits für PP und PE erhältlich. Konzentrate für weitere Polymere befinden sich derzeit in der Entwicklung. Ein Nanoclay-PP-Komposit ist beispielsweise als Ersatz für ein konventionelles talkumgefülltes PP im Interieurbereich eines Fahrzeuges vorgesehen. Nanoclay-PA6/PA66-Copolymer-Komposite können als Werkstoffe für Zahnriemen eingesetzt werden. Im Vordergrund steht die Entwicklung von Nanokompositen mit thermoplastischer Matrix und nanopartikulären Füllstoffen, die gute Gleiteigenschaften mit hohen Verschleißfestigkeiten kombinieren.

Die Herstellung von Nanokompositen der in Rede stehenden Art ist technisch bislang nur begrenzt durchführbar. Insbesondere die Dispergierung der Nanopartikel in der Polymerschmelze ist mit Problemen behaftet. Werden wäßrige Nanopartikel-Dispersionen, sogenannte Hydrosole, als Ausgangsstoffe für die Herstellung von Nanokompositen der in Rede stehenden Art eingesetzt, führt die Hydrophobierung und die Überführung in die Pulverform zu Agglomeraten, deren Redispergierung in der Polymerschmelze einen hohen mechanischen Energieeintrag erfordert und häufig nur unzureichend gelingt. Werden organische Dispergiermedien oder Weichmacher eingesetzt, um Nanopartikel in eine Polymerschmelze einzubringen, stellt sich der Phasentransfer der Nanopartikel aufwendig dar und erfordert den Einsatz großer Mengen organischer Lösemittel oder von Weichmachern, die in abriebsfesten Beschichtungen von Nachteil sind.

Darüber hinaus ist es möglich, Nanopartikel durch in situ Polymerisation, nämlich der Durchführung von Polyreaktionen in Anwesenheit von dispergierten Nanopartikeln, in einer Polymermatrix einzuschließen, was aufwendig ist und einen hohen Kenntnisstand in der Polymerchemie erfordert.

Aufgabe der vorliegenden Erfindung ist es, ein Verfahren der eingangs genannten Art zur Verfügung zu stellen, das eine einfache Herstellung von Nanokompositen mit gleichmäßig in der thermoplastischen Matrix dispergierten Nanopartikeln ermöglicht.

Die vorgenannte Aufgabe ist bei einer ersten Ausführungsform eines Verfahrens der eingangs genannten Art durch die Merkmale von Anspruch 1 gelöst.

Die vorgenannte Aufgabe ist bei einer alternativen Ausführungsform eines Verfahrens der eingangs genannten Art durch die Merkmale von Anspruch 2 gelöst.

Grundsätzlich unterscheiden sich die beiden vorgenannten Ausführungsformen der Erfindung dadurch, daß gemäß der ersten Ausführungsform die Nanopartikel-Dispersion, das Extraktionsmittel und das Matrixpolymer in einer Verfahrensstufe miteinander in Kontakt gebracht werden. Gemäß der alternativen Ausführungsform ist es dagegen vorgesehen, die Nanopartikel-Dispersion in einem ersten Kontaktvorgang lediglich mit dem Extraktionsmittel in Kontakt zu bringen und nach erfolgter Extraktion der Nanopartikel in einem anschließenden weiteren Kontaktvorgang das die Nanopartikel aufweisende Extraktionsmittel und ggf. das Dispersionsmittel mit der Polymerschmelze zu vermischen. Nach dem Inkontaktbringen mit der Polymerschmelze ist es in beiden Fällen möglich, das Extraktionsmittel und/oder das Dispersionsmittel von der Polymerschmelze abzutrennen, worauf nachfolgend noch eingegangen wird.

Der Erfindung liegt der Grundgedanke zugrunde, ein überkritisches oder komprimiertes Fluid zur Extraktion von Nanopartikeln aus einer Nanopartikel-Dispersion einzusetzen und die nanopartikelhaltige Extraktphase mit dem geschmolzenem Matrixpolymer in Kontakt zu bringen bzw. zu vermischen. Dabei wird das Extraktionsmittel in der Polymerschmelze gelöst und/oder dispergiert. Im Ergebnis betrifft die Erfindung ein Hochdruckphasentransferverfahren für Nanopartikel, bei dem die Extraktion mit Fluiden bei hohem, meist überkritischen Druck erfolgt. Dabei macht man sich die Erscheinung zu Nutze, daß die Löslichkeit ausgewählter Extraktionsmittel in Polymeren oberhalb eines stoffspezifischen Druckes stark zunimmt. Das Druckniveau, auf dem das erfindungsgemäße Verfahren durchgeführt wird, richtet sich somit danach, ob das Extraktionsmittel überkritisch oder komprimiert, das heißt aus dem bei Normalbedingungen gasförmigen Zustand in den flüssigen oder in den überkritischen Zustand komprimiert, zur Extraktion der Nanopartikel eingesetzt werden soll. Das Druckniveau, auf dem das erfindungsgemäße Verfahren durchgeführt wird, liegt vorzugsweise zwischen 50 bar bis 1000 bar, vorzugsweise zwischen 80 bar bis 800 bar, insbesondere zwischen 100 bar bis 600 bar.

Das Extraktionsmittel erfüllt zum einen eine Funktion als Phasentransfermedium, wobei Nanopartikel mit dem Extraktionsmittel aus einer Nanopartikel-Dispersion extrahiert werden. Zum anderen erfüllt das Extraktionsmittel eine Funktion als Integrationsmedium, wobei das Extraktionsmittel mit einem Matrixpolymer vermischt wird, was zu einer Dispergierung der Nanopartikel in dem Matrixpolymer führt. In diesem Zusammenhang wird darauf hingewiesen, daß die Verwendung von einem überkritischen oder komprimierten Fluid zur Extraktion von Nanopartikeln bereits eine technische Neuerung darstellt, die auch in anderen Anwendungsbereichen vorteilhaft eingesetzt werden kann. Die Erfindung umfaßt daher auch den Grundgedanken als solchen, überkritische oder komprimierte Fluide zur Extraktion von Nanopartikeln einzusetzen, und zwar unabhängig von der weiteren Verwendung der Nanopartikel/Extraktionsmittel-Dispersion.

Das als Extraktionsmittel eingesetzte überkritische oder komprimierte Fluid weist vorzugsweise eine höhere Löslichkeit in der Polymerschmelze auf als das Dispersionsmittel. Dies gilt insbesondere im Zusammenhang mit dem Einsatz von wäßrigen Nanopartikel-Dispersionen. Grundsätzlich kann aber auch die leichtere Abtrennbarkeit des Extraktionsmittels aus der Polymerschmelze ausschlaggebend für den Einsatz eines überkritischen oder komprimierten Extraktionsmittels sein, wobei das Extraktionsmittel nach Entspannung als Gas im gasförmigen, d.h. unterkritischen Zustand, leicht abgetrennt werden kann.

Durch die Löslichkeit des Extraktionsmittels in der Polymerschmelze sinken die Schmelztemperatur, die Viskosität und die Grenzflächenspannung der Polymerschmelze, während die Geschwindigkeit des Stofftransports zunimmt. Dies führt zu einer gleichmäßigen Dispergierung der Nanopartikel in der Polymerschmelze und zum Eindringen der Polymerschmelze in interpartikuläre Räume. Im Ergebnis können mit der Erfindung höhere Konzentrationen der Nanopartikel in der Polymerschmelze erreicht werden, als dies bislang möglich gewesen ist. Höhere Nanopartikelkonzentrationen sind vor allem für die Formulierung von Nanoblend-Konzentraten oder Nano-Masterbatches von Bedeutung, wobei die Nanopartikelkonzentration erfindungsgemäßer Konzentrate auch größer als 40 Gew.-% sein kann. Die Absenkung der Schmelztemperatur und damit auch der Verarbeitungstemperatur senkt darüber hinaus die thermische Belastung des Polymermaterials.

Eine Filtration und Trocknung der nanopartikelhaltigen Dispersion, die häufig zu stark agglomerierten und schwer zu dispergierenden Nanopartikeln führt, ist bei dem erfindungsgemäßen Verfahren nicht notwendig. Darüber hinaus ist der Einsatz weiterer organischer Lösemittel oder Weichmacher als Transportmedium, die in vielen Fällen die Produkteigenschaften der Polymere verschlechtern oder wieder abgetrennt werden müssen, nicht oder in nur erheblich geringerem Umfang erforderlich. Im übrigen ist das erfindungsgemäße Verfahren einfach durchführbar und erfordert einen vergleichsweise geringeren verfahrenstechnischen Aufwand.

Sofern die Affinität der Nanopartikel zu dem Dispersionsmittel ausreichend kleiner ist als die Affinität der Nanopartikel zu dem Extraktionsmittel, ist der Einsatz eines grenzflächenaktiven Zuschlagstoffes nicht in jedem Fall notwendig.

Die nach dem erfindungsgemäßen Verfahren hergestellten Nanokomposite können vorzugsweise als Beschichtungs- oder Sinterpulver eingesetzt werden, die zur Herstellung von Schichten mit hoher Abriebsbeständigkeit und sehr guten Barriereeigenschaften eingesetzt werden können. Aufgrund der gleichmäßigen Verteilung der Nanopartikel in dem Matrixpolymer und der daraus resultierenden Oberflächentopologie weisen die so erhältlichen Schichten sehr geringe Reibungsbeiwerte auf. Darüber hinaus können die nach dem erfindungsgemäßen Verfahren hergestellten Nanokomposite nach entsprechender Aufbereitung als Additive oder als Nanopartikelkonzentrate, sogenannte Nano-Masterbatches, eingesetzt werden.

Als Transfermedium bzw. Integrationsmedium kann vorzugsweise überkritisches Kohlendioxid (scCO₂) eingesetzt werden. Das Druckniveau, auf dem das erfindungsgemäße Verfahren durchgeführt wird, liegt in diesem Fall oberhalb des kritischen Druckes von Kohlendioxid. Grundsätzlich kann aber auch verflüssigtes Kohlendioxid eingesetzt werden, was zu einem entsprechend geringeren Druckniveau führt. Kohlendioxid zeichnet sich neben den moderaten kritischen Bedingungen durch seine leichte und hohe Verfügbarkeit und die einfache technische Handhabung aufgrund der Nichtbrennbarkeit und Ungiftigkeit aus. Der Einsatz von CO₂ zur lösungsmittelfreien Extraktion ist in der Lebensmittel- und Pharmaindustrie schon seit vielen Jahren eine etablierte Technik. Aufgrund dieser langjährigen positiven Erfahrungen ist der Umgang mit scCO₂ heute Stand der Technik und der kommerzielle Markt für chemische Apparate verfügt über eine entsprechende Technologie mit entsprechenden Hochdruck-Armaturen, -Pumpen und -Behältern. Aufgrund der im Vergleich zu wäßrigen Dispersionsmitteln guten Löslichkeit von scCO₂ in der Polymerschmelze sinken die Schmelzviskosität und die Grenzflächenspannung, was zu einer sehr gleichmäßigen Verteilung der Nanopartikel in der Polymerschmelze führt.

Neben Kohlendioxid können als weitere in das flüssige oder überkritische Zustandsgebiet komprimierte Extraktionsmittel n- oder iso-Alkane, vorzugsweise Ethan und/oder Propan und/oder Butan, und/oder n- oder iso-Alkene, vorzugsweise Ethen und/oder Propen und/oder Buten, und/oder halogenhaltige Kohlenwasserstoffe und/oder Ether, vorzugsweise Dimethylether und/oder Ethylmethylether und/oder Diethylether, und/oder stickstoffhaltige Verbindungen, vorzugsweise Stickstoff und/oder Ammoniak und/oder Distickstoffmonoxid, und/oder Schwefelhexafluorid eingesetzt werden. Die Auswahl eines geeigneten Extraktionsmittels hängt neben den Lösemitteleigenschaften des Extraktionsmittels unter anderem von der Art des nanopartikelhaltigen Dispersionsmittels, von der Art der Nanopartikel, von der Wirtschaftlichkeit des Verfahrens sowie von der Umweltverträglichkeit und der Nachhaltigkeit des Extraktionsmittels als Transfermedium ab.

Bei einer bevorzugten Ausführungsform der Erfindung ist vorgesehen, daß nach dem (ersten) Kontaktvorgang eine im wesentlichen das Dispersionsmittel aufweisende Raffinatphase und die Extraktphase in einer Trenneinrichtung voneinander getrennt werden und daß lediglich die Extraktphase mit der Polymerschmelze vermischt wird. Als Trenneinrichtung können Schwerkraftabscheider oder weitere, an sich aus dem Stand der Technik bekannte Trenneinrichtungen zum Einsatz kommen, die einen Betrieb bei überkritischen oder komprimierten Bedingungen zulassen. In Abhängigkeit vom Wasseraufnahmevermögen des Matrixpolymers ist es grundsätzlich auch möglich, daß die Raffinat- und die Extraktphase gemeinsam mit der Polymerschmelze und gegebenenfalls einem weiteren Zuschlagstoff in Kontakt gebracht werden. Bei zu hohem Wassergehalt kann es jedoch zu Fehlstellen in der Polymermatrix kommen, die zu negativen Materialeigenschaften des so erhältlichen Nanokomposites führen können.

Die Abtrennung des Extraktionsmittels von der Polymerschmelze kann durch Entspannung der Mischung aus Extraktionsmittel und in der Polymerschmelze dispergierten Nanopartikeln von überkritischen bzw. komprimierten Bedingungen auf Normalbedingen erfolgen, wobei an sich aus dem Stand der Technik bekannte Entgasungsverfahren eingesetzt werden können. Vorzugsweise ist jedoch vorgesehen, daß nach dem weiteren Kontaktvorgang das Extraktionsmittel von der Polymerschmelze durch ein Hochdrucksprühverfahren, insbesondere durch das PGSS-Hochdrucksprühverfahren (Particles from Gas Saturated Solutions), abgetrennt wird. Aus der EP-A 0 744 992 ist bereits ein PGSS-Hochdrucksprühverfahren bekannt.

Erfindungsgemäß ist es vorzugsweise vorgesehen, die Polymerschmelze zusammen mit dem in der Polymerschmelze gelösten oder dispergiertem Extraktionsmittel und den in der Polymerschmelze dispergierten Nanopartikeln zu versprühen. Aufgrund hoher Scherkräfte kommt dabei zu einer sehr gleichmäßigen Verteilung der Nanopartikel in der Polymerschmelze. Das Gemisch aus dem Matrixpolymer, den in dem Matrixpolymer dispergierten Nanopartikeln und dem in dem Matrixpolymer gelösten Extraktionsmittel wird bei Drücken von 50 bar bis 1000 bar, vorzugsweise von 80 bar bis 800 bar, insbesondere von 100 bar bis 600 bar, durch die Düsen der Hochdrucksprüheinrichtung auf Umgebungsdruck entspannt. Dabei bilden sich Polymertröpfchen, aus denen das gelöste Extraktionsmittel gasförmig entweicht. Das Extraktionsmittel kühlt sich durch den Joule-Thomson-Effekt bei der Entspannung schlagartig ab. Dabei werden die Polymertröpfchen im umgebenden Extraktionsmittel direkt gekühlt und verfestigt. Durch das in der Polymerschmelze gelöste Extraktionsmittel kommt es zu einer Schmelzpunktabsenkung, so daß die Betriebstemperatur des PGSS-Verfahrens bis zu 40 K unter dem Schmelzpunkt des Matrixpolymers liegen kann. Werden das Dispersionsmittel und das Extraktionsmittel mit der Polymerschmelze vermischt, kann die Mischung aus dem Dispersionsmittel, dem Extraktionsmittel und der Polymerschmelze versprüht und das Dipsersionsmittel mit dem gasförmigen Extraktionsmittel abgezogen werden.

In Zusammenhang mit dem PGSS-Verfahren ist es bei Einsatz wäßriger Nanopartikel-Dispersionen vorzugsweise vorgesehen, zunächst die Raffinatphase von der Extraktphase abzutrennen und anschließend lediglich die Extraktphase mit der Polymerschmelze in Kontakt zu bringen. Dadurch kann das Verfahren weiter vereinfacht werden. Im übrigen läßt es das PGSS-Verfahren bedarfsweise zu, daß die Extraktphase und ggf. das Dispersionsmittel direkt im Bereich der Düsen einer Hochdrucksprüheinrichtung mit der Polymerschmelze in Kontakt treten bzw. mit der Polymerschmelze vermischt werden.

Aufgrund der sehr schnellen Erstarrung der Polymerschmelze kommt es bei Einsatz des PGSS-Verfahrens nicht zu einer Phasenseparation und es bilden sich mikronisierte Nanokomposite. Mit dem PGSS-Hochdrucksprühverfahren können einfach und kostengünstig (Mikro-)Feinpulver mit unterschiedlichen Partikelformen hergestellt werden. Je nach Prozeßbedingungen werden Fasern, Mikroschäume mit Porendurchmessern im Submikronbereich, poröse Partikel mit großen Hohlräumen und Mikrokugeln gezielt hergestellt.

Als Matrixpolymere werden aufgrund ihrer Werkstoffeigenschaften vorzugsweise Polyoxymethylen (POM) und Polybutylenterephthalat (PBT) eingesetzt. POM zeichnet sich durch eine hohe Festigkeit und Steifigkeit aus, was zu einer sehr hohen Verschleißfestigkeit einer Beschichtung beitragen kann. Weiterhin weist POM eine sehr gute Barrierewirkung gegenüber Kraftstoffen auf. PBT wird dagegen in der Regel als Substitut für PA12 eingesetzt, wenn die Wasseraufnahmefähigkeit des Polyamids von Nachteil ist. PBT ist abriebfest, schlagzäh, gleitfähig und gut einfärbbar. Beide vorgenannten Polymere weisen ein gutes Preis-Leistungs-Verhältnis auf und sind daher als Werkstoffe für Beschichtungs- und Sinterpulver im Automobilbereich besonders geeignet. Das erfindungsgemäße Verfahren ist grundsätzlich natürlich auch zur Herstellung von Nanokompositen unter Verwendung von Standard-Matrixpolymeren einsetzbar, beispielsweise zur Herstellung von Nanokompositen auf PE-, PP-, PS- oder PA-Basis sowie zur Verarbeitung diverser technischer Polymere.

Als Nanopartikel können vorzugsweise nanoskalige Tonmineral- und SilicaPartikel ausgewählt werden. Tonminerale eignen sich insbesondere zur Optimierung von Polymermischungen im Hinblick auf Flammschutz, Barriereeigenschaften, mechanische und thermische Festigkeit. Bei sphärischen Silica-Partikeln ist vor allem die erhöhte Kratzfestigkeit unter Beibehaltung der Transparenz von Vorteil. Tonminerale, insbesondere natürlicher Montmorillonit und synthetischer Hectorit (beide Smectite) lassen sich in wäßriger Dispersion sehr leicht auf Nanopartikelgröße dispergieren. Die einzelnen Partikel liegen dabei als Nanoplättchen vor. Aufgrund der geringen Dicke von ca. 1 nm weisen sie eine sehr hohe spezifische Oberfläche auf. Die permanent negative Schichtladung begünstigt die Oberflächenmodifizierung über die Anbindung kationischer Gruppen. Darüber hinaus ist das erfindungsgemäße Verfahren zur Einarbeitung von mit Nanopartikeln bzw. polynuklearen Spezies interkalierten Clays, sogenannten Pillared Clays, geeignet. Diese sind insbesondere zur Integration weiterer Funktionalitäten wie Katalyse, elektrische Leitfähigkeit oder Magnetisierbarkeit in Schichtsystemen einsetzbar. Als unpolare Nanopartikel können Ruß- oder Graphitpartikel und/oder Metalloxide, -sulfide, -sulfate oder -carbonate eingesetzt werden. Darüber hinaus können Kohlenstoffasern, sogenannte Single- oder Multi-Walled Carbon-Nanotubes, eingesetzt werden.

Vorzugsweise handelt es sich bei der Nanopartikel-Dispersion um eine wäßrige Dispersion aus der Gruppe der Hydrosole, die für zahlreiche Stoffsysteme kostengünstig und mit geeigneter Partikelgrößenverteilung erhältlich sind. Beispielsweise können Wasserglas-basierte Silicasole, Nanoclay-Dispersionen, nanoskalige Pasten von Titandioxid und Bariumsulfat eingesetzt werden. Silicasole sind in Form wäßriger salzarmer Solen in hohen Konzentrationen und mit definierten Partikelgrößen verfügbar. Neben der sphärischen Form der Partikel weisen die Partikel im Vergleich zu den Tonmineralien auch eine differierende Oberflächenchemie auf. Wenngleich wäßrige Nanopartikel-Dispersionen kostengünstig und hinsichtlich verfügbarer Rohstoffe, Zusammensetzung und Partikelgrößen in breiten Bereichen erhältlich sind, können grundsätzlich natürlich auch organische Nanopartikel-Dispersionen eingesetzt werden.

Der grenzflächenaktive Zuschlagstoff unterstützt den Phasentransfer der Nanopartikel aus dem Dispersionsmittel in das Extraktionsmittel und die Dispersion der Nanopartikel in dem Extraktionsmittel. Die Eignung grenzflächenaktiver Zuschlagstoffe und deren jeweilige bevorzugte Konzentration zeigt sich darüber hinaus dadurch, daß die Bildung stabiler Emulsionen (Dispersionsmittel, Extraktionsmittel) verhindert wird. Zur Hydrophobierung von Nanoclays können quartäre Ammoniumsalze und/oder Hydroxycarbonsäuren, insbesondere Distearyldimethylammoniumchlorid, Stearylbenzyldimethylammoniumchlorid, Dodecylbenzyldimethylammoniumbromid, und/oder Aminocarbonsäuren eingesetzt werden.

Weiterhin kann es sich bei den grenzflächenaktiven Substanzen insbesondere um Poly(1,1-dihydroperfluorooctylacrylat), Poly(1,1-dihydroperfluorooctylmethacrylat), Octa(ethylenglycol), 2,6,8-trimethyl-4-nonylether, Perfluordecanthio14 handeln. Dies gilt insbesondere bei Verwendung von überkritischen Kohlendioxid als Extraktionsmittel. Letztendlich ist aber für jede Kombination aus Nanopartikeln, Dispersionsmittel und Extraktionsmittel eine geeignete grenzflächenaktive Substanz zu identifizieren.

Während Nanoclays eine chemisch weitgehend inerte, permanent negative Oberflächenladung aufweisen, ist die Oberflächenladung der Silicapartikel pH-Wert abhängig. Als grenzflächenaktiver Zuschlagstoff bzw. für die Oberflächenmodifizierung können daher Chloralkylsilane und/oder Alkoxysilane eingesetzt werden, die mit den oberflächenständigen Silanolgruppen reagieren können, was eine Vielzahl chemischer Modifikationen ermöglicht.

Der Polymerschmelze können weitere Zuschlagstoffe beigemischt werden, wobei es sich um an sich aus dem Stand der Technik bekannte Gleitadditive, Verstärkungs- und Füllstoffe handeln kann. Der weitere Zuschlagstoff kann ausgewählt werden aus der Gruppe der PTFE-Pulver und/oder der Metallpulver, vorzugsweise Bronze, und/oder der Glasfasern und/oder der Glasmikrokugeln und/oder der Pigmente und/oder der keramischen Pulver. Zudem kann Molybdänsulfid als weiterer Zuschlagstoff eingesetzt werden.

Der Kontaktvorgang kann vorzugsweise in einer statischen Mischeinrichtung und/oder in einem Rührkessel und/oder in einem Hochdruckhomogenisator, insbesondere in einem Strahldispergator, erfolgen. Der weitere Kontaktvorgang kann ebenfalls in einem statischen Mischer und/oder in einem Extruder und/oder in einem Hochdruckhomogenisator, insbesondere in einem Strahldispergator, und/oder in einer Düseneinrichtung erfolgen. In einem Strahldispergator wird eine Strömung aufgeteilt, eine hohe Scherung durch Umlenkung und Beschleunigung der Strömung erzeugt und schließlich durch Prall zweier Strömungsstrahlen eine weitere Dispergierung ermöglicht.

Strahldispergatoren werden üblicherweise zur Herstellung von Emulsionen aus niederviskosen Flüssigkeiten eingesetzt. Bei dem erfindungsgemäßen Verfahren können aufgrund des hohen Druckniveaus Strahldispergatoren vorteilhaft zur gleichmäßigen Verteilung der Nanopartikel bei der Dispergierung der Nanopartikel in dem Extraktionsmittel und bei der Dispergierung der Nanopartikel in der Polymerschmelze eingesetzt werden. Darüber hinaus können weitere an sich aus dem Stand der Technik bekannte Rühr- und Rotor-Stator-Systeme zur Erzeugung von Scherströmungen oder Kolloidmühlen eingesetzt werden, um die Nanopartikel zu dispergieren. Werden Extruder zur Dispergierung der Nanopartikel in der Polymerphase eingesetzt, ist darauf zu achten, daß der Extruder ausreichend gegen den im Extruder herrschenden Überdruck sperrt, um die Förderung des Polymers sicherzustellen.

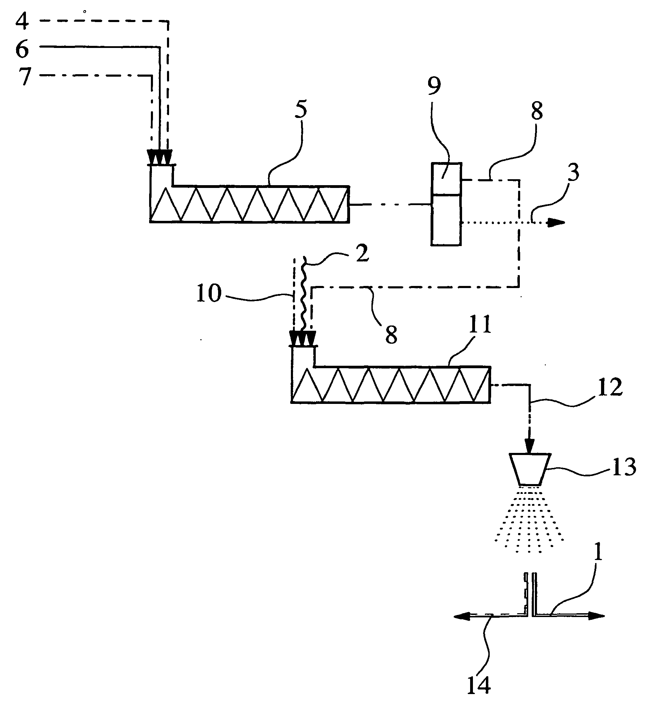

Im einzelnen gibt es eine Vielzahl von Möglichkeiten, das erfindungsgemäße Verfahren auszugestalten und weiterzubilden, wobei einerseits auf die abhängigen Patentansprüche und andererseits auf die nachfolgende Beschreibung eines bevorzugten Ausführungsbeispiels der Erfindung unter Bezugnahme auf die Zeichnung verwiesen wird.

In der einzigen Figur ist schematisch der Verfahrensablauf einer Ausführungsform eines Verfahrens zur Herstellung eines Nanokomposites 1 dargestellt, wobei das Nanokomposit 1 wenigstens ein thermoplastisches Matrixpolymer 2 und in dem Matrixpolymer 2 dispergierte nicht dargestellte Nanopartikel aufweist. Gemäß dem dargestellten Verfahren ist es vorgesehen, in einem ersten Kontaktvorgang eine Nanopartikel und wenigstens ein Dispersionsmittel 3 aufweisende wäßrige Nanopartikel-Dispersion 4 in einer ersten Kontakteinrichtung 5 mit überkritischem Kohlendioxid als Extraktionsmittel 6 und mit wenigstens einem grenzflächenaktiven Zuschlagstoff 7 in Kontakt zu bringen. Als Dispersionsmittel 3 ist Wasser vorgesehen. Bei der ersten Kontakteinrichtung 5 kann es sich vorzugsweise um einen statischen Mischer handeln.

Der grenzflächenaktive Zuschlagstoff 7 führt zu einer Hydrophobierung der Nanopartikel und zu einer Destabilisierung der Nanopartikel-Dispersion 4. Als Folge der höheren Affinität der oberflächenmodifizierten Nanopartikel findet ein Phasentransfer der Nanopartikel aus der Nanopartikel-Dispersion 4 in das überkritische Extraktionsmittel 6 statt, wobei die Nanopartikel in dem Extraktionsmittel 6 dispergiert werden. Dieser Prozeßschritt kann vorzugsweise in statischen Mischelementen oder kontinuierlich betriebenen Hochdruckrührkesseln durchgeführt werden. Darüber hinaus können Strahldispergatoren zum Einsatz kommen.

Anschließend ist bei dem dargestellten Ausführungsbeispiel vorgesehen, nach der Dispergierung der Nanopartikel in dem überkritischen Extraktionsmittel 6 eine im wesentlichen das Dispersionsmittel 3 aufweisende wäßrige Raffinatphase und eine Extraktphase 8, bei der es sich im vorliegenden Ausführungsbeispiel um eine scCO₂/Nanopartikel-Dispersion handelt, in einer Trenneinrichtung 9 bzw. einem Phasenseparator, beispielsweise einem Schwerkraftabscheider, voneinander bei vorzugsweise überkritischen Bedingungen des Extraktionsmittels 6 zu trennen. Die Extraktphase 8 wird anschließend in einem weiteren Kontaktvorgang zur Dispergierung der Nanopartikel in dem Matrixpolymer 2 und gegebenenfalls unter Zugabe weiterer Zuschlagstoffe 10, wie beispielsweise unter Zugabe von Pigmenten oder Gleitadditiven, bei überkritischen Bedingungen in einer weiteren Kontakteinrichtung 11 mit dem im Schmelzzustand befindlichen Matrixpolymer 2 in Kontakt gebracht und vermischt. Aufgrund der hohen Löslichkeit von scCO₂ in der Polymerschmelze sinken deren Schmelzviskosität und die Grenzflächenspannung. Dies führt zu einer sehr gleichmäßigen Dispergierung der Nanopartikel in der Polymerschmelze während des weiteren Kontakt- bzw. Mischvorgangs. Bei der weiteren Kontakteinrichtung 11 kann es sich vorzugsweise um einen Extruder oder um einen Strahldispergator handeln, wobei der Strahldispergator aufgrund des hohen vorliegenden Druckniveaus vorteilhaft eingesetzt werden kann.

In einem anschließenden Sprühprozeß, der bei der beschriebenen Ausführungsform nach dem PGSS-Verfahren abläuft, wird die Mischung 12 aus dem Matrixpolymer 2, dem überkritischen Extraktionsmittel 6 und den Nanopartikeln in Düsen einer Hochdrucksprüheinrichtung 13 beschleunigt und unterliegt dabei hohen Scherkräften, die zu einer sehr gleichmäßigen Verteilung der Nanopartikel in der Polymerschmelze beitragen. Während des Sprühprozesses wird die Mischung 12 von einem Druckniveau von 50 bar bis 800 bar auf Umgebungsdruck entspannt. Dabei bilden sich Polymertröpfchen aus dem Matrixpolymer, aus denen das gelöste und eingemischte Kohlendioxid als gasförmiger Extraktionsmittelstrom 14 entweicht. Aufgrund des Joule-Thomson-Effektes kommt es bei der Entspannung zu einer starken Abkühlung der Polymertröpfchen im umgebenden gasförmigen Kohlendioxid, die zu einer schlagartigen Erstarrung der Polymertröpfchen führt. Dies verhindert die Phasenseparation, wobei mikronisierte Nanokomposite 1 entstehen.

## Patentansprüche

1. Verfahren zur Herstellung eines Nanokomposites (1) aufweisend wenigstens ein thermoplastisches Matrixpolymer (2) und in dem Matrixpolymer (2) dispergierte Nanopartikel, wobei Nanopartikel mit Hilfe eines überkritischen oder komprimierten Fluides in einem Polymer verteilt werden, **dadurch gekennzeichnet, daß** eine Nanopartikel und wenigstens ein Dispersionsmittel (3) aufweisende Nanopartikel-Dispersion (4) in einem Kontaktvorgang mit wenigstens einem mit dem Dispersionsmittel (3) nicht mischbaren überkritischen oder komprimierten Fluid als Extraktionsmittel (6) und ggf. mit wenigstens einem grenzflächenaktiven Zuschlagstoff (7) sowie mit einer das Matrixpolymer (2) aufweisenden Polymerschmelze und ggf. mit wenigstens einem weiteren Zuschlagstoff (10) in wenigstens einer Kontakteinrichtung (5) in Kontakt gebracht wird, wobei während des Kontaktvorgangs ein Phasenübergang von Nanopartikeln aus dem Dispersionsmittel (3) in das Extraktionsmittel (6) erfolgt und die Nanopartikel in dem Extraktionsmittel (6) dispergiert werden, wobei während des Kontaktvorgangs das Extraktionsmittel (6) in der Polymerschmelze gelöst und/oder dispergiert wird, um die Nanopartikel in dem Matrixpolymer (2) zu dispergieren, und wobei nach dem Kontaktvorgang das Extraktionsmittel (6) und/oder das Dispersionsmittel (3) von der Polymerschmelze abgetrennt werden.

2. Verfahren zur Herstellung eines Nanokomposites (1) aufweisend wenigstens ein thermoplastisches Matrixpolymer (2) und in dem Matrixpolymer (2) dispergierte Nanopartikel, wobei Nanopartikel mit Hilfe eines überkritischen oder komprimierten Fluides in einem Polymer verteilt werden, **dadurch gekennzeichnet, daß** in einem Kontaktvorgang eine Nanopartikel und wenigstens ein Dispersionsmittel (3) aufweisende Nanopartikel-Dispersion (4) in einer Kontakteinrichtung (5) mit wenigstens einem mit dem Dispersionsmittel (3) nicht mischbaren überkritischen oder komprimierten Fluid als Extraktionsmittel (6) und ggf. mit wenigstens einem grenzflächenaktiven Zuschlagstoff (7) in Kontakt gebracht wird, wobei während des Kontaktvorgangs ein Phasenübergang von Nanopartikeln aus dem Dispersionsmittel (3) in das Extraktionsmittel (6) erfolgt und die Nanopartikel in dem Extraktionsmittel (6) dispergiert werden, wobei in einem anschließenden weiteren Kontaktvorgang zur Dispergierung der Nanopartikel in dem Matrixpolymer (2) das die Nanopartikel im wesentlichen aufweisende Extraktionsmittel (6) in einer weiteren Kontakteinrichtung (11) mit einer das Matrixpolymer (2) aufweisenden Polymerschmelze und ggf. mit wenigstens einem weiteren Zuschlagstoff (10) in Kontakt gebracht wird und wobei das Extraktionsmittel (6) und ggf. das Dispersionsmittel (3) nach dem weiteren Kontaktvorgang von der Polymerschmelze abgetrennt werden.

3. Verfahren nach einem der vorhergehenden Ansprüche 1 oder 2, **dadurch gekennzeichnet, daß** als Extraktionsmittel (6, 14) Kohlendioxid ausgewählt wird und/oder daß das Extraktionsmittel ausgewählt wird aus der Gruppe der n- oder iso-Alkane, vorzugsweise Ethan und/oder Propan und/oder Butan, und/oder aus der Gruppe der n- oder iso-Alkene, vorzugsweise Ethen und/oder Propen und/oder Buten, und/oder aus der Gruppe der halogenhaltigen Kohlenwasserstoffe und/oder aus der Gruppe der Ether, vorzugsweise Dimethylether und/oder Ethylmethylether und/oder Diethylether, und/oder aus der Gruppe stickstoffhaltiger Verbindungen, vorzugsweise Stickstoff und/oder Ammoniak und/oder Distickstoffmonoxid, und/oder daß als Extraktionsmittel Schwefelhexafluorid ausgewählt wird.

4. Verfahren nach einem der vorhergehenden Ansprüche 2 bis 3, **dadurch gekennzeichnet, daß** vor dem weiteren Kontaktvorgang eine im wesentlichen das Dispersionsmittel (3) aufweisende Raffinatphase und eine das Extraktionsmittel (6) und die Nanopartikel im wesentlichen aufweisende Extraktphase (8) in einer Trenneinrichtung (9) voneinander getrennt werden und daß lediglich die Extraktphase (8) in Kontakt mit der Polymerschmelze gebracht wird.

5. Verfahren nach einem der vorhergehenden Ansprüche, **dadurch gekennzeichnet, daß** das Extraktionsmittel (6) und ggf. das Dispersionsmittel (3) durch ein Hochdrucksprühverfahren, insbesondere durch das PGSS-Hochdrucksprühverfahren, abgetrennt werden.

6. Verfahren nach einem der vorhergehenden Ansprüche, **dadurch gekennzeichnet, daß** als Matrixpolymer (2) PBT und/oder POM und/oder PA ausgewählt wird.

7. Verfahren nach einem der vorhergehenden Ansprüche, **dadurch gekennzeichnet, daß** als Nanopartikel nanoskalige Tonmineral- und/oder Silicaund/oder Ruß- und/oder Graphitpartikel und/oder Metalloxide, -sulfide, - sulfate und/oder Kohlenstoff-Nanotubes ausgewählt werden.

8. Verfahren nach einem der vorhergehenden Ansprüche, **dadurch gekennzeichnet, daß** eine wäßrige Nanopartikel-Dispersion (4) ausgewählt wird aus der Gruppe der Hydrosole und daß, vorzugsweise, die wäßrige Nanopartikel-Dispersion (4) ausgewählt ist aus der Gruppe der Wasserglas-basierten Silicasole und/oder Nanoclay-Dispersionen und/oder nanoskaliger Pasten von Titandioxid und Bariumsulfat.

9. Verfahren nach einem der vorhergehenden Ansprüche, **dadurch gekennzeichnet, daß** der grenzflächenaktive Zuschlagstoff (7) ausgewählt wird aus der Gruppe der Ammoniumsalze und/oder der Hydroxycarbonsäuren und/oder der Aminocarbonsäuren und/oder der Chloralkylsilane und/oder der Alkoxysilange.

10. Verfahren nach einem der vorhergehenden Ansprüche, **dadurch gekennzeichnet, daß** der weitere Zuschlagstoff (10) ausgewählt wird aus der Gruppe der PTFE-Pulver und/oder der Metallpulver, vorzugsweise Bronze, und/oder der Glasfasern und/oder der Glasmikrokugeln und/oder der Pigmente und/oder der keramischen Pulver und/oder daß als weiterer Zuschlagstoff (10) Molybdänsulfid ausgewählt wird.

11. Verfahren nach einem der vorhergehenden Ansprüche, **dadurch gekennzeichnet, daß** der Kontaktvorgang in einer statischen Mischeinrichtung und/oder in einem Rührkessel und/oder in einem Hochdruckhomogenisator, insbesondere in einem Strahldispergator, erfolgt.

12. Verfahren nach einem der vorhergehenden Ansprüche, **dadurch gekennzeichnet, daß** der weitere Kontaktvorgang in einem statischen Mischer und/oder in einem Extruder und/oder in einem Hochdruckhomogenisator, insbesondere in einem Strahldispergator, und/oder in einer Düseneinrichtung erfolgt.

## Claims

1. A method for producing a nanocomposite (1) comprising at least one thermoplastic matrix polymer (2) and nanoparticles dispersed in the matrix polymer (2), wherein nanoparticles are distributed in a polymer by means of a supercritical or compressed fluid, **characterized in that** a nanoparticle dispersion (4) comprising nanoparticles and at least one dispersing agent (3) is contacted with at least one supercritical or compressed fluid immiscible with the dispersing agent (3) as extracting agent (6) and optionally with at least one surface-active additive (7) and with a polymer melt comprising the matrix polymer (2) and optionally with at least one additional additive (10) in a contacting process in at least one contacting device (5), a phase transition of nanoparticles from the dispersing agent (3) into the extracting agent (6) taking place and the nanoparticles being dispersed in the extracting agent (6) during the contacting process, the extracting agent (6) being dissolved and/or dispersed in the polymer melt during the contacting process to disperse the nanoparticles in matrix polymer (2), and the extracting agent (6) and/or dispersing agent (3) being separated from the polymer melt after the contacting process.

2. A method for producing a nanocomposite (1) comprising at least one thermoplastic matrix polymer (2) and nanoparticles dispersed in the matrix polymer (2), wherein nanoparticles are distributed in a polymer by means of a supercritical or compressed fluid, **characterized in that** a nanoparticle dispersing (4) comprising nanoparticles and at least one dispersing agent (3) is contacted with at least one supercritical or compressed fluid immiscible with the dispersion agent (3) as extracting agent (6) and optionally with at least one surface-active additive (7) in a contacting process in a contacting device (5), a phase transition of nanoparticles from the dispersing agent (3) into the extracting agent (6) taking place and the nanoparticles being dispersed in the extracting agent (6) during the contacting process, the extracting agent (6) essentially comprising the nanoparticles being contacted in a subsequent additional contacting process with a polymer melt comprising matrix polymer (2) and optionally with at least one additional additive (10) in an additional contacting device (11) to disperse the nanoparticles in matrix polymer (2), and the extracting agent (6) and optionally dispersing agent (3) being separated from the polymer melt after the additional contacting process.

3. The method according to any one of the preceding claims 1 or 2, **characterized in that** carbon dioxide is selected as extracting agent (6, 14) and/or the extracting agent is selected from the group of n- or iso-alkanes, preferably ethane and/or propane and/or butane, and/or from the group of n- or iso-alkenes, preferably ethene and/or propene and/or butene, and/or from the group of halogen-containing hydrocarbons and/or from the group of ethers, preferably dimethyl ether and/or ethyl methyl ether and/or diethyl ether, and/or from the group of nitrogen-containing compounds, preferably nitrogen and/or ammonia and/or dinitrogen monoxide, and/or sulfur hexafluoride is selected as extracting agent.

4. The method according to any one of the preceding claims 2 to 3, **characterized in that** prior to the additional contacting process, a raffinate phase essentially comprising dispersing agent (3) and an extract phase (8) essentially comprising extracting agent (6) and the nanoparticles are separated from one another in a separating device (9) and only the extract phase (8) is contacted with the polymer melt.

5. The method according to any one of the preceding claims, **characterized in that** the extracting agent (6) and optionally the dispersing agent (3) are separated by a high-pressure spraying process, in particular by the PGSS high-pressure spraying process.

6. The method according to any one of the preceding claims, **characterized in that** PBT and/or POM and/or PA is selected as matrix polymer (2).

7. The method according to any one of the preceding claims, **characterized in that** nanoscale clay mineral and/or silica and/or carbon black and/or graphite particles and/or metal oxides, sulfides, sulfates and/or carbon nanotubes are selected as nanoparticles.

8. The method according to any one of the preceding claims, **characterized in that** an aqueous nanoparticle dispersion (4) is selected from the group of hydrosols and the aqueous nanoparticle dispersion (4) is preferably selected from the group of water glass-based silica sols and/or nanoclay dispersions and/or nanoscale pastes of titanium dioxide and barium sulfate.

9. The method according to any one of the preceding claims, **characterized in that** the surface-active additive (7) is selected from the group of ammonia salts and/or hydroxycarboxylic acids and/or aminocarboxylic acids and/or chloroalkylsilanes and/or alkoxysilanes.

10. The method according to any one of the preceding claims, **characterized in that** the additional additive (10) is selected from the group of PTFE powders and/or metal powders, preferably bronze, and/or glass fibers and/or glass microspheres and/or pigments and/or ceramic powders and/or moybdenum sulfide is selected as additional additive (10).

11. The method according to any one of the preceding claims, **characterized in that** the contacting process takes place in a static mixing device and/or in a stirred tank and/or in a high-pressure homogenizer, in particular in a jet disperser.

12. The method according to any one of the preceding claims, **characterized in that** the additional contacting process takes place in a static mixer and/or in an extruder and/or in a high-pressure homogenizer, in particular in a jet disperser, and/or in a nozzle device.

## Revendications

1. Procédé de production d'un nanocomposite (1) comportant au moins une matrice polymère thermoplastique (2) et des nanoparticules dispersées dans la matrice polymère (2), les nanoparticules étant dispersées dans un polymère à l'aide d'un fluide supercritique ou comprimé, **caractérisé en ce que,** dans un processus de mise en contact réalisé dans au moins un dispositif de contact (5), une dispersion de nanoparticules (4) comportant des nanoparticules dans au moins un agent de dispersion (3) est mise en contact avec au moins un fluide supercritique ou comprimé qui est non miscible avec l'agent de dispersion (3) et qui sert d'agent d'extraction (6) et, le cas échéant, avec au moins un agent auxiliaire tensioactif (7) ainsi qu'avec un polymère fondu comportant la matrice polymère (2) et, le cas échéant, avec au moins un autre agent auxiliaire (10), les nanoparticules subissant, lors dudit processus de mise en contact, un transfert de phase de l'agent de dispersion (3) vers l'agent d'extraction (6) pour se disperser dans l'agent d'extraction (6), l'agent d'extraction (6) étant dissous et/ou dispersé dans ledit polymère fondu lors dudit processus de mise en contact afin de disperser les nanoparticules dans la matrice polymère (2), l'agent d'extraction (6) et/ou l'agent de dispersion (3) étant séparés, suite au processus de mise en contact, du polymère fondu.

2. Procédé de production d'un nanocomposite (1) comportant au moins une matrice polymère thermoplastique (2) et des nanoparticules dispersées dans la matrice polymère (2), les nanoparticules étant dispersées dans un polymère à l'aide d'un fluide supercritique ou comprimé, **caractérisé en ce que,** dans un processus de mise en contact réalisé dans au moins un dispositif de contact (5), une dispersion de nanoparticules (4) comportant des nanoparticules dans au moins un agent de dispersion (3) est mise en contact avec au moins un fluide supercritique ou comprimé qui est non miscible avec l'agent de dispersion (3) et qui sert d'agent d'extraction (6) et, le cas échéant, avec au moins un agent auxiliaire tensioactif (7), les nanoparticules subissant, lors dudit processus de mise en contact, un transfert de phase de l'agent de dispersion (3) vers l'agent d'extraction (6) pour se disperser dans l'agent d'extraction (6), l'agent d'extraction (6) comportant l'essentiel des nanoparticules étant ensuite, dans un autre processus de mise en contact destiné à disperser les nanoparticules dans la matrice polymère (2) et réalisé dans un autre dispositif de contact (11), mise en contact avec un polymère fondu comportant la matrice polymère (2) et, le cas échéant, avec un autre agent auxiliaire (10), l'agent d'extraction (6) et, le cas échéant, l'agent de dispersion (3) étant séparés, suite à l'autre processus de mise en contact, du polymère fondu.

3. Procédé selon l'une des revendications précédentes 1 ou 2, **caractérisé en ce que** l'on choisit le dioxyde de carbone comme agent d'extraction (6, 14) et/ou que l'agent d'extraction est choisi dans le groupe des net iso-alcanes, s'agissant de préférence d'éthane et/ou de propane et/ou de butane, et/ou dans le groupe des n- et iso-alcènes, s'agissant de préférence d'éthène et/ou de propène et/ou de butène, et/ou dans la groupe des hydrocarbures halogénés et/ou dans le groupe des éthers, s'agissant de préférence d'éther diméthylique et/ou d'éthylméthyléther et/ou d'éther diéthylique, et/ou dans le groupe des composés azotés, s'agissant de préférence d'azote et/ou d'ammoniaque et/ou de protoxyde d'azote, et/ou que l'on choisit l'hexafluorure de soufre comme agent d'extraction.

4. Procédé selon l'une des revendications précédentes 2 à 3, **caractérisé en ce que,** avant ledit autre processus de mise en contact, une phase de raffinat comportant l'essentiel de l'agent de dispersion (3) est séparée, dans un dispositif de séparation (9), d'une phase d'extrait (8) comportant l'essentiel de l'agent d'extraction (6) et des nanoparticules et que seule la phase d'extrait (8) est mise en contact avec le polymère fondu.

5. Procédé selon l'une des revendications précédentes, **caractérisé en ce que** l'agent d'extraction (6) et, le cas échéant, l'agent de dispersion (3) sont séparés par un procédé de pulvérisation à haute pression, notamment par le procédé de pulvérisation à haute pression dit PGSS.

6. Procédé selon l'une des revendications précédentes, **caractérisé en ce que** l'on choisit le PBT et/ou le POM et/ou le PA comme matrice polymère (2).

7. Procédé selon l'une des revendications précédentes, **caractérisé en ce que** l'on choisit des particules d'argile minérale et/ou de silice et/ou de noir de carbone et/ou de graphite et/ou des oxydes, sulfures, sulfates de métaux, à l'échelle nano, et/ou des nanotubes de carbone comme nanoparticules.

8. Procédé selon l'une des revendications précédentes, **caractérisé en ce que** l'on choisit, dans le groupe des hydrosols, une dispersion aqueuse de nanoparticules (4) et que la dispersion aqueuse de nanoparticules (4) est préférentiellement choisie dans le groupe des sols de silice à base de verre soluble et/ou des dispersions de nano-argiles et/ou des pâtes de dioxyde de titane et de sulfate de baryum à l'échelle nano.

9. Procédé selon l'une des revendications précédentes, **caractérisé en ce que** l'agent auxiliaire tensioactif (7) est choisi dans le groupe des sels d'ammonium et/ou des acides carboxyliques hydroxylés et/ou des acides carboxyliques aminés et/ou des alkylsilanes chlorés et/ou des alcoxysilanes.

10. Procédé selon l'une des revendications précédentes, **caractérisé en ce que** l'autre agent auxiliaire (10) est choisi dans le groupe des PTFE en poudre et/ou des poudres métalliques, s'agissant de préférence de bronze, et/ou des fibres de verre et/ou des microbilles en verre et/ou des pigments et/ou des poudre céramiques et/ou que le sulfure de molybdène est choisi comme autre agent auxiliaire (10).

11. Procédé selon l'une des revendications précédentes, **caractérisé en ce que** ledit processus de mise en contact est réalisé dans un dispositif de mélange statique et/ou dans un récipient équipé d'un dispositif d'agitation et/ou dans un homogénéisateur à haute pression, notamment dans un disperseur à jet.

12. Procédé selon l'une des revendications précédentes, **caractérisé en ce que** ledit autre processus de mise en contact est réalisé dans un mélangeur statique et/ou dans une extrudeuse et/ou dans un homogénéisateur à haute pression, notamment dans un disperseur à jet, et/ou dans un dispositif à buse.
